# EUROPÄISCHE PATENTANMELDUNG

(11) **EP 2 395 675 A2**
(43) Veröffentlichungstag der Anmeldung: **14.12.2011**
(21) Anmeldenummer: 11004666.1
(22) Anmeldetag: 08.06.2011
(51) Int. Cl.: H04B 1/715

(54) **Vorrichtung und Verfahren zur Torüberwachung**

(30) Priorität: 14.06.2010 DE 102010023729
(71) Anmelder: ELDAT GmbH, 15711 Königs Wusterhausen (DE)
(72) Erfinder: Hörmann, Michael, 33790 Halle/Westf. (DE)
(74) Vertreter: Laufhütte, Dieter

(57) **Zusammenfassung**

Die vorliegende Erfindung betrifft eine Vorrichtung und ein Verfahren zur Überwachung eines motorisch angetriebenen Tores bzw. einer Tür mit einer stationären Steuereinheit und wenigstens einer mobilen Einheit, wobei die Steuereinheit und wenigstens eine mobile Einheit wenigstens einen Speicher aufweisen oder mit diesem in Verbindung stehen oder mit diesem verbindbar sind, wobei in dem Speicher eine Kanaltabelle abgelegt oder ablegbar ist. Die Steuereinheit ist mit wenigstens einer mobilen Einheit über einen aus der Kanaltabelle gewählten Übertragungskanal drahtlos zur Kommunikation per Zeitmultiplexverfahren verbindbar oder verbunden und weist weiterhin ein Überwachungsmittel zur Überwachung der Kanalqualität auf, das nur bei Bedarf einen Kanalwechsel auslöst.

## Beschreibung

Die vorliegende Erfindung betrifft ein Verfahren und eine Vorrichtung zur Überwachung von motorisch angetriebenen Toren oder Türen. Insbesondere werden ein Verfahren und eine entsprechende Vorrichtung aufgezeigt, die eine drahtlose Signalübertragung zwischen einer Überwachungseinheit und einer Steuerungseinrichtung ermöglicht.

Derartige Überwachungseinheiten für motorisch angetriebene Tore und Türen dienen zur Überwachung aller sicherheitsrelevanten Bewegungen und Abläufe des Tor- oder Türantriebs bzw. der Tor- oder Türbewegungen. Bewegen sich Personen, Fahrzeuge oder dergleichen im Gefahrenbereich des Tores bzw. der Tür, müssen diese Bewegungen erkannt und in Echtzeit an die zugehörige Steuerungseinrichtung gemeldet werden. Gleiches gilt für Hindernisse, die sich im Bewegungsbereich des Torblatts bzw. der Tür befinden. Eine mögliche Kollision zwischen Hindernis und Torblatt bzw. Tür muss umgehend erkannt und an die Steuerungseinrichtung gemeldet werden. Außerdem müssen technische Störungen und/oder Fehlfunktionen der Überwachungseinheit frühzeitig erkannt werden, um diese anzuzeigen und gegebenenfalls den Antrieb aus sicherheitsrelevanten Gründen außer Betrieb zu setzen.

Neben Überwachungseinheiten, die an einem ortsfesten Teil des Tores montiert werden, wie beispielsweise Lichtschranken, Lichtgitter, Bewegungsmelder und Radaranlagen, werden Überwachungseinheiten an beweglichen Torteilen, insbesondere an der Hauptschließkante des Tores, zur Absicherung angebracht. Zur Detektion von Hindernissen sehen diese Schließkantensicherungen elektrische, optische oder auch pneumatische Detektionsmittel vor, die kontinuierlich oder zyklisch den Zustand der Schließkante überprüfen. Sobald ein vom Normalzustand abweichendes Verhalten registriert wird, entweder aufgrund des Auftreffens auf ein Hindernis oder infolge einer Störung der Detektionsmittel, muss die Überwachungseinheit der Steuerungseinrichtung die Statusänderung anzeigen, um eine Notabschaltung des Torantriebs oder die Umkehrung der Torlaufrichtung zu erwirken bzw. um den Torantrieb erst gar nicht in Betrieb zu setzen.

Die Schließkantensicherung ist am ortsveränderlichen Teil des Tores montiert und folgt der Öffnungs- und Schließbewegung des Tores. Die Relativbewegung der Schließkante zum Torantrieb stellt insbesondere im Hinblick auf die Energieversorgung bzw. die Signalübermittlung besondere Anforderungen an die Übertragungsstrecke zwischen Überwachungseinheit und Steuerungseinrichtung.

Kabelbasierte Lösungen sind besonders wartungsintensiv, erfordern einen erheblichen Montageaufwand und sind darüber hinaus auch anfällig gegenüber Beschädigungen und Verschleiß. Allerdings kann durch eine Kabelverbindung eine problemlose Stromversorgung der Überwachungseinheit bereitgestellt werden. Alternativ kommen Funk- oder Infrarotsysteme für eine drahtlose Übertragung zwischen der Überwachungseinheit und der Steuereinrichtung in Frage. Die erforderliche Energieversorgung der Überwachungseinheit wird mit Hilfe einer separaten Hilfsspannungsquelle realisiert, die in Form einer Batterie oder eines wiederaufladbaren Energiespeichers am Montageort der Überwachungsvorrichtung sitzt oder in diese integriert ist. Da die Energiespeicherung begrenzt ist und ein wiederholter Austausch der Energieversorgung vermieden werden soll, muss der Energieverbrauch der Überwachungseinheit ohne merkliche Beeinträchtigung der Übertragungsfunktionalität bzw. Überwachungsqualität reduziert werden.

Ferner müssen durch Fremdeinflüsse hervorgerufene Interferenzen in der Übertragungsstrecke zwischen Überwachungseinheit und Steuereinrichtung berücksichtigt werden und gegebenenfalls Schutzmaßnahmen getroffen werden. Beispielsweise müssen im Störfall alternative Übertragungswege zur Verfügung stehen. Gerade die Verwendung von lizenzfreien Frequenzbändern birgt die Gefahr, dass eine Vielzahl diverser Funksysteme gleichzeitig auf den freien Frequenzbereich zugreift und folglich Interferenzen im Übertragungssystem produziert. Dementsprechend muss sichergestellt sein, dass Echtzeit kritische Signale auch beim Auftreten von Interferenzen zuverlässig von der Gegenstelle empfangbar sind.

Aus dem Stand der Technik sind bereits zahlreiche Lösungen bekannt, die eine drahtlose Verbindung zwischen Überwachungseinheit und Steuerungseinheit vorsehen. Da die Versorgung der Überwachungssysteme meist batteriebetrieben erfolgt, wird durch gezielte Maßnahmen versucht, den Energiebedarf der Überwachungseinrichtung weitestgehend zu minimieren. Vor diesem Hintergrund sieht die US 5,412,297 vor, einen Vibrationsdetektor zur Erfassung von Torbewegungen zu verwenden, der einen im Ruhezustand befindlichen Mikroprozessor nur bei auftretenden Vibrationen aufweckt. Dies setzt jedoch eine Torbewegung voraus, so dass für eine gewisse Zeitdauer die Überwachung zunächst inaktiv ist. Weiterhin gestaltet sich die Konfiguration des Empfindlichkeitsbereichs des Vibrationsdetektors als schwierig, da auftretende Windstöße und anderweitige Erschütterungen nicht zu einer ungewollten Inbetriebnahme des Torantriebs führen sollen.

Ein weiteres Verfahren zur Minimierung des Energiebedarfs einer drahtlos mit einer Steuereinheit in Verbindung stehenden Überwachungseinheit ist aus der US 6,732,476 bekannt. Dabei erfolgt das Aufwecken der Sendeeinheit der Überwachungseinheit mit anschließender Übertragung der Statussignale ca. einmal pro Sekunde. Da der Funktionszustand der Überwachungsmittel allerdings kontinuierlich abgefragt wird, ist die Batterie trotzdem permanent belastet.

Schutzmaßnahmen gegen auftretende Störungen im Frequenzband finden in keiner der voranstehenden Druckschriften Beachtung.

Einen möglichen Lösungsansatz bietet die Patentschrift DE 100 00 641 C1, in der vorgeschlagen wird, die mobile Einheit mit mindestens zwei Auswertungs- und Sendemodulen auszustatten, die parallel, auf unterschiedlichen Funkfrequenzen, mit zwei Empfangs- und Steuermodulen auf der stationären Seite des Tores kommunizieren. Damit soll eine höhere Übertragungssicherheit erreicht werden, da Abschaltsignale auch dann noch den Empfänger erreichen, wenn einer der beiden Kanäle gestört ist. Außerdem wird bei Ausbleiben eines der beiden Signale dieser Übertragungskanal sofort als ,gestört' erkannt. Aufgrund der zweifachen Ausführung aller für die Kommunikation erforderlichen Komponenten ist allerdings ein hoher technischer Aufwand erforderlich.

Eine andere Lösung ist in der europäischen Patentschrift EP 2 007 022 B1 aufgezeigt, die eine Kommunikation zwischen Überwachungseinheit und Steuereinheit auf Basis mehrerer Übertragungskanäle ausführt. Das angewendete Übertragungsverfahren setzt auf ein bekanntes Frequenzsprungverfahren, wodurch fortlaufend synchrone Kanalsprünge während des Funkbetriebs ausgeführt werden. Die Auswahl der Sprungkanäle wird entweder durch die Steuereinrichtung oder alternativ durch die mobilen Einheiten getroffen und zum Informationsaustausch der Gegenstelle per Nachricht zur Verfügung gestellt. Die Umsetzung eines Frequenzsprungverfahrens erfordert jedoch einen hohen technischen Aufwand für die Ausführung des Übertragungsprotokolls. Insbesondere die notwendige Synchronisation beider Stationen, der Austausch von aktualisierten Kanalbelegungstabellen und die Ausführung der Frequenzsprünge machen den Einsatz hochkomplexer Bauteile erforderlich.

Die Aufgabe der vorliegenden Erfindung besteht darin, eine Vorrichtung sowie ein Verfahren für die Überwachung von motorisch angetriebenen Toren bzw. Türen aufzuzeigen, dass sich durch ein vereinfachtes Übertragungsprotokoll und einen gegenüber dem Stand der Technik geringeren technischen Aufwand auszeichnet und bei gleichzeitiger Gewährleistung einer zuverlässigen und störungssicheren Überwachung und Signalisierung per Funkübertragung einen energieeffizienten Betrieb erlaubt.

Diese Aufgabe wird zum einen durch eine Vorrichtung zur Überwachung eines motorisch angetriebenen Tores bzw. einer Tür nach den Merkmalen des Anspruchs 1 gelöst. Weitere vorteilhafte Ausführungen der Vorrichtung sind Gegenstand der sich an den Hauptanspruch anschließenden Unteransprüche.

Demnach ist eine Vorrichtung zur Überwachung eines motorisch angetriebenen Tores bzw. einer Tür mit einer stationären Steuereinheit und wenigstens einer mobilen Einheit vorgesehen. Die Steuereinheit und wenigstens eine mobile Einheit weisen wenigstens einen Speicher auf, in dem eine Kanaltabelle abgelegt oder ablegbar ist. Die Kanaltabelle weist eine Vielzahl an nutzbaren Kanälen auf, wobei die Einträge der Kanaltabelle der Steuereinheit und der Kanaltabelle wenigstens einer mobilen Einheit identisch sind.

Vorzugsweise weist die Steuereinheit und jede mobile Einheit jeweils einen Speicher auf, wobei auch eine externe Anbindung eines Speichers denkbar ist. Die Steuereinheit und wenigstens eine mobile Einheit kommunizieren auf einem bevorzugten, aus der Kanaltabelle des Speichers ausgewählten Übertragungskanal. Als verwendetes Übertragungsverfahren wird ein Zeitmultiplexverfahren eingesetzt, wobei der gewählte Übertragungskanal von der Steuereinheit in mehrere bevorzugt gleich große Teilschlitze unterteilt ist. Ferner weist die Steuereinheit ein Überwachungsmittel auf oder ist mit diesem mittelbar oder unmittelbar verbindbar. Das Überwachungsmittel überwacht die Kanalqualität des aktuell für die Übertragung verwendeten Kanals. Die Steuereinheit ist derart ausgeführt, so dass unter Berücksichtung der Überwachungsdaten nur bei Bedarf ein Kanalwechsel ausgelöst wird. Funkstörungen werden auf dem verwendeten Übertragungskanal durch das Überwachungsmittel erfaßt und die Steuereinheit veranlaßt einen Kanalwechsel auf einen alternativen, störungsfreien Übertragungskanal aus der Kanaltabelle.

Vorteilhafterweise fungiert die Steuereinheit als Master im Kommunikationssystem und übernimmt in diesem Zusammenhang alle Funktionen, die der Ablaufsteuerung des Übertragungsprotokolls zuzuordnen sind. Bevorzugt fällt in den Zuständigkeitsbereich der Steuerungseinheit die Kanalauswahl, die Abfrage der einzelnen mobilen Einheiten und die entsprechende Auswertung und Analyse der empfangenen Funksignale. Sämtliche in das Kommunikationssystem eingebrachten mobilen Einheiten arbeiten entsprechend im Slave-Modus. Eine Ausstattung der Steuereinheit, sowie der mobilen Einheiten mit einem Funktransceiver erscheint unter diesen Gegebenheiten als selbstverständlich.

Da es sich bei dem verwendeten Übertragungsverfahren um ein zeitsynchrones Übertragungsverfahren handelt, ist die Steuereinheit sowie wenigstens eine mobile Einheit mit einem entsprechenden Timer versehen.

Ferner ist es wünschenswert, den Energiebedarf der mobilen Einheiten weiter zu optimieren. Die mobilen Einheiten sind bevorzugt derart ausgeführt, so dass sich diese von einem Aktivzustand in einen Ruhezustand versetzen lassen. Im Ruhezustand wird der Energiebedarf der verwendeten Bauteile der mobilen Einheit auf ein Minimum reduziert. Vorteilhafterweise ist eine Weckeinrichtung in der mobilen Einheit vorgesehen bzw. mit dieser verbindbar, die in Abhängigkeit des Timer-Signals des integrierten Timers die entsprechenden Bauteile aktiviert und die mobile Einheit in den Aktivzustand versetzt.

In einer vorteilhaften Ausführung der Erfindung umfasst wenigstens eine mobile Einheit eine mobile Überwachungseinheit, die wenigstens ein Detektionsmittel aufweist oder mittelbar oder unmittelbar mit einem Detektionsmittel in Verbindung steht oder verbindbar ist. Die mobile Überwachungseinheit kann bevorzugt auf Anfrage oder kontinuierlich den Torzustand mit Hilfe des Detektionsmittels erfassen.

Das Detektionsmittel kann bevorzugt auf einem elektrischen, optischen oder pneumatischen Wirkprinzip aufgebaut sein. Denkbar sind Ausführungen der Vorrichtung mit mobilen Überwachungseinheiten, die auf die Verwendung von gleichen oder verschiedenartigen Detektionsmitteln setzen.

Um eine drahtlose Bedienbarkeit der Vorrichtung zu ermöglichen, kann es vorgesehen sein, dass wenigstens eine mobile Einheit eine Funkfernbedienung umfasst. Die Funkfernbedienung dient zur drahtlosen Bedienung der Steuereinrichtung bzw. des Torantriebs. Ein Einsatz verschiedenartiger Funkfernbedienungen, denen unterschiedliche Steuerfunktionalitäten zukommen, ist möglich. Ebenfalls ist der Einsatz mehrerer gleichartiger Funkfernbedienungen mit identischem Funktionsumfang denkbar.

Das Frequenzspektrum wird in Deutschland oder in anderen Staaten durch eine öffentliche Behörde reguliert, die den gesamten Frequenzbereich in einen lizenzregulierten, sowie einen lizenzfreien Bereich unterteilt. Um die Produktionskosten sowie die Nutzungskosten einer derartigen Vorrichtung so weit wie möglich zu reduzieren, ist es vorteilhaft, wenn alle Übertragungskanäle in einem oder auch in mehreren lizenzfreien Frequenzbändern liegt. Insbesondere wird wenigstens ein Übertragungskanal im 2,4 GHz-Frequenzband gewählt. Vorzugsweise werden alle Übertragungskanäle im nahezu weltweit lizenzfrei nutzbaren 2,4 GHz Frequenzband gewählt.

Um eine zyklische Statusüberprüfung der einzelnen mobilen Einheiten durch die Steuereinheit zu installieren, ist es erforderlich, dass die Kommunikationsverbindung zwischen Steuereinheit und wenigstens einer mobilen Einheit bidirektional ausgeführt ist. Die bidirektionale Auslegung des Kommunikationsweges bietet den Vorteil, dass die Steuereinheit eine Statusabfrage von sich aus initialisieren kann, um die Funktionsfähigkeit der einzelnen mobilen Einheiten zu überprüfen.

Da wenigstens eine mobile Einheit einer Bewegung unterliegt, erweist sich eine batteriebetriebene Energieversorgung der mobilen Einheit als besonders vorteilhaft. Eine komplizierte und störanfällige Versorgungsleitung zur mobilen Einheit ist daher nicht erforderlich. Die batteriebetriebene Energieversorgung kann bevorzugt als Akku ausgeführt sein, um eine Wiederaufladung der mobilen Einheit zu gewährleisten. Grundsätzlich eignen sich beliebige Energiespeicher zur Versorgung der mobilen Einheit.

Als verwendetes Überwachungsmittel der Steuereinheit, das zur Beurteilung der Kanalqualität herangezogen wird, dient zweckmäßig ein sogenannter Received-Power-Detektor, der anhand der empfangenen Signalstärke eine Aussage über die Kanalqualität trifft. Außerdem registriert das Überwachungsmittel die Häufigkeit der fehlgeschlagenen Verbindungen.

Weiterhin bezieht sich die vorliegende Erfindung auf ein Verfahren zum Betrieb eines motorisch angetriebenen Tores bzw. einer Tür, wobei eine Steuereinheit und wenigstens eine mobile Einheit vorgesehen ist, die über eine drahtlose Verbindung miteinander kommunizieren. Das erfindungsgemäße Verfahren sieht vor, dass die Steuereinheit aus einer abrufbaren Kanaltabelle einen bevorzugten Übertragungskanal auswählt. Die Kommunikation zwischen der Steuereinheit und allen weiteren mobilen Einheiten erfolgt gemäß dem Zeitmultiplex-Übertragungsverfahren auf dem bevorzugten, ausgewählten Übertragungskanal, wobei jeder mobilen Einheit ein Zeitschlitz durch die Steuereinheit zugeteilt wird. Während der Ausführung des erfindungsgemäßen Verfahrens überwacht die Steuereinheit zyklisch oder kontinuierlich den verwendeten Übertragungskanal auf interne oder externe Störeinflüsse und führt gegebenenfalls einen Kanalwechsel auf einen alternativen, in der Tabelle hinterlegten Kanal durch.

Das erfindungsgemäße Verfahren bietet Zugriff auf eine Vielzahl von potentiellen Übertragungskanälen, wobei zum Verbindungsaufbau ein Übertragungskanal aus der Kanaltabelle anhand von vordefinierten Entscheidungskriterien ausgewählt wird. Auf Grundlage des gewählten Übertragungskanal wird die gesamte Kommunikation zwischen der Steuereinheit und den mobilen Einheiten abgewickelt. Die Einbindung von mehreren mobilen Einheiten in das System wird mit Hilfe des Zeitmultiplexverfahrens umgesetzt. Im Gegensatz zum Frequenzsprungverfahren wird ein Kanalwechsel nur im Störfall initiiert und die verwendeten Bauteile in Sende-und Empfangseinheit sind weniger komplex aufgebaut.

In einem ersten Verfahrensschritt kann vorgesehen sein, dass die Steuereinheit zur Inbetriebnahme des Systems die Kanalqualität aller in der Kanaltabelle hinterlegten potentiellen Kanäle überprüft. Anhand der erfaßten Meßdaten wird der Übertragungskanal ausgewählt, der unter den vorliegenden Bedingungen die beste Übertragungsqualität bietet. Zur Beurteilung der Kanalqualität werden bevorzugt externe oder auch interne Störeinflüsse bzw. Interferenzen berücksichtigt.

Zur Verbindungsinitialisierung zwischen der Steuereinheit und der mobilen Einheit werden beide Einheiten bevorzugt manuell oder auch automatisch in einen Lernbetrieb versetzt. Dieser Lernbetrieb umfasst die gegenseitige Synchronisation der Empfänger- und Sendermodule der jeweiligen Einheiten. Weiterhin beinhaltet der Lernbetrieb vorteilhafterweise den Austausch verbindungsrelevanter Daten bzw. steuerungsrelevanter Daten.

In einer besonders bevorzugten Ausführung des erfindungsgemäßen Verfahrens kann der bevorzugte Lernbetrieb die folgenden Verfahrensschritte umfassen:
a) Übermittlung eines Lernsignals über den ausgewählten Übertragungskanal von der Steuereinheit,
b) Überprüfung aller in der Kanaltabelle hinterlegten Kanäle auf ein ausgesendetes Lernsignal der Steuereinheit durch wenigstens eine mobile Einheit und Übermittlung eines Antwortsignals an die Steuereinheit nach erfolgreichem Empfangen des Lernsignals und
c) Zuweisen eines reservierten Zeitschlitzes an die einzubindende mobile Einheit durch die Steuereinheit, Auswerten des empfangenen Antwortsignals und Hinterlegung der relevanten Auswertedaten mit der zugewiesenen Zeitschlitzkennung in einem dafür vorgesehenen Speicher.

Um eine eindeutige Kennzeichnung und Identifizierung der einzelnen mobilen Einheiten zu gewährleisten, umfasst das Antwortsignal der mobilen Einheit im Lernmodus vorteilhafterweise Adress- und/oder Profilinformationen. Die Adressinformation beinhaltet eine eindeutige und der mobilen Einheit zuordenbare Adresse, die fest in der mobilen Einheit hinterlegt ist. Unter bestimmten Umständen kann diese Adressinformation durch die Steuereinheit überschrieben werden. Die Profilinformation bezieht sich auf die Art der verwendeten mobilen Einheit. Der Steuereinheit soll auf Grundlage der Profilinformation mitgeteilt werden, ob es sich bei der mobilen Einheit um eine Funkfernbedienung oder eine mobile Überwachungseinheit mit zusätzlich integriertem Detektionsmittel handelt. In letztgenannten Fall werden weitere Informationen bezüglich der Art des Detektionsmittels übertragen.

Bei Bedarf kann vorteilhafterweise als letzter Verfahrensschritt des Lernbetriebs eine Lernfahrt erfolgen, die insbesondere bei der Anwendung des Verfahrens in einem Torantrieb, eine Lernfahrt zwischen den beiden Endlagen des Tores umfasst. Die Lernfahrt eignet sich beispielsweise zur Feinjustierung der Sende- und Empfangseinheit der mobilen Einheit und/oder der Steuereinheit. In diesem Zusammenhang lässt sich z. B. die Sendeleistung der mobilen Einheit optimal an die Einbaubedingungen anpassen.

Nach erfolgreichem Abschluss des Lernprozesses schalten die Steuereinheit sowie die mobile Einheit automatisch oder manuell in den Normalbetrieb. Im Speicher der Steuereinheit befinden sich Informationen, die jeder mobilen Einheit einschlägige, verbindungsrelevante Daten, sowie einen reservierten Zeitschlitz zuordnen. Anhand dieser Daten kann die Steuereinheit jede eingebundene mobile Einheit eindeutig identifizieren und ansprechen. Im Normalbetrieb geht die mobile Einheit zunächst in Empfangsbereitschaft und wartet auf dem ermittelten Kanal auf ein erstes Abfragetelegramm von der Steuereinheit. Mit dem Empfang dieses Telegramms kann sich die mobile Einheit auf die Steuereinheit synchronisieren. Die weitere Kommunikation im Normalbetrieb wird anschließend gemäß dem von der Steuereinheit vorgegebenen Zeitschema durchgeführt.

Ist die mobile Einheit als Funkfernbedienung ausgeführt, kann es zweckmäßig sein, dass der mobilen Einheit von der Steuereinheit eine einheitliche Adresse und/oder ein einheitlicher Zeitschlitz zugeteilt wird. Im Falle mehrerer Funkhandsender erscheint eine individuelle Verwaltung und eine individuelle Adressierung der Funkhandsender durch die Steuereinheit als nicht zweckmäßig, da sich diese in ihrer Funktionalität nicht oder nur geringfügig voneinander unterscheiden. Die Verwaltung der Vielzahl von Funkhandsendern unter einer einzigen einheitlichen Adresse, sowie die Verwendung eines einzigen Zeitschlitzes ist demnach resourcenschonend und weitaus übersichtlicher. Die den Funkfernbedienungen zugeteilte Adresse wird von der Steuereinheit an die jeweilige Funkfernbedienung übermittelt und in dieser in dem entsprechenden Speicher hinterlegt.

Vorteilhafterweise sind jederzeit weitere mobile Einheiten mit der Steuereinheit auch während des Betriebs verbindbar. Hierdurch lässt sich die Überwachungsmöglichkeit eines motorbetriebenen Tores bzw. einer Tür beliebig durch den Einsatz weiterer mobiler Überwachungseinheiten erweitern. Auch die Einbindung mehrerer Funkfernbedienungen erweist sich als zweckmäßig, falls weitere potentielle Bediener des Antriebs vorgesehen sind.

Um den Energiebedarf der mobilen Einheiten soweit wie möglich zu reduzieren, kann es vorgesehen sein, dass wenigstens eine mobile Einheit zyklisch von einem Aktivzustand in einen energiesparsamen Ruhezustand versetzt wird, falls eine Überwachung nicht notwendig ist. Im Aktivzustand sind die erforderlichen Bauteile der mobilen Einheit betriebsbereit, um schnellstmöglich auf auftretende Ereignisse zu reagieren und eine Mitteilung an die Steuereinheit abzusenden. Während des Antriebsstillstands lassen sich die als Überwachungseinheit ausgeführten mobilen Einheiten zyklisch in einen Ruhezustand versetzen, der den Energiebedarf optimiert.

Ein Aufwecken der wenigstens einen mobilen Einheit aus dem Ruhezustand erfolgt vorteilhafterweise durch eine Weckeinrichtung im Zusammenwirken mit einem Timer. Besonders bevorzugt beinhaltet das von der Steuereinheit ausgesendete Abfragetelegramm weitere Informationen über mögliche Ruhezustands- und/oder Aktivzustandsphasen. Demnach ist es vorgesehen, dass die Steuereinheit wenigstens einer mobilen Einheit mitteilt, wann das nachfolgende Abfragetelegramm ausgesendet wird, das heißt, für welchen Zeitraum die mobile Einheit in einen Ruhezustand versetzbar ist oder über welchen Zeitraum der Aktivzustand beibehalten werden muss.

Vorteilhafterweise lässt sich das erfindungsgemäße Verfahren nach einem der oben genannten Merkmale auf der im voranstehenden Teil beschriebenen erfindungsgemäßen Vorrichtung ausführen.

Weitere Einzelheiten und Vorteile der Erfindung werden nun anhand des in den Figuren dargestellten Ausführungsbeispiels näher erläutert. Es zeigen:
- Figur 1:: ein Vertikaltor mit der erfindungsgemäßen Überwachungsvorrichtung,
- Figur 2:: ein Blockaschaltbild der erfindungsgemäßen Überwachungseinrichtung,
- Figur 3:: ein vereinfachtes Blockschaltbild der Steuereinheit der erfindungemäßen Überwachungseinheit und
- Figur 4:: ein Zeitschema des Kommunikationsablaufs.

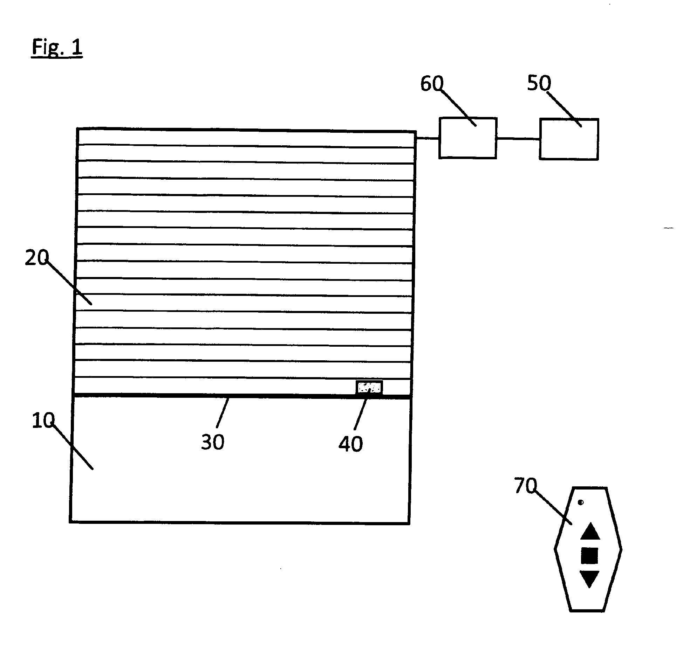

In den Figuren 1 bis 4 wird eine erfindungsgemäße Vorrichtung zur Überwachung eines motorisch angetriebenen Tores dargestellt, die eine Überwachung der wesentlichen sicherheitsrelevanten Bewegungen und Abläufe des Torantriebs bzw. des Torblattes zulässt. Bei Annäherung von Personen, Fahrzeugen oder dergleichen bzw. beim Auftreffen des Tores auf ein im Torbewegungsweg befindliches Hindernis müssen diese Ereignisse unmittelbar erfaßt und in Echtzeit an die zugehörige Steuereinheit gemeldet werden. Weiterhin müssen Störungen bzw. Fehlfunktionen der Überwachungseinrichtung rechtzeitig erkannt werden, so dass in solchen Fällen der Antrieb gestoppt oder außer Betrieb gesetzt wird.

Die Vorrichtung umfasst eine Vielzahl an mobilen Einheiten, die sich in Überwachungseinheiten, Funkfernbedienungen oder weitere Einheiten untergliedern lassen. Eine Steuereinheit übernimmt die Ansteuerung bzw. Regelung des Torantriebs. Der Steuerprozeß erfolgt unter Berücksichtigung der durch die mobilen Einheiten zur Verfügung gestellten Informationen, sowie der über ein Bedienfeld getätigten manuellen Steuereingaben.

Figur 1 zeigt eine Ausführung der erfindungsgemäßen Überwachungsvorrichtung am Beispiel eines vertikalen Tores. Dargestellt ist eine Wandöffnung 10, in deren seitlichen Begrenzungen ein Torblatt 20 in Auf- und Abwärtsrichtung bewegbar ist. Das Torblatt 20 wird nach unten hin durch ein Abschlussprofil 30 abgeschlossen, welches somit die untere Schließkante des Tores 20 bildet. Der Zustand der Schließkante 30 wird von einer mobilen Überwachungseinheit 40 überwacht und per Funk an die Steuereinheit 50 gemeldet. Die Steuereinheit 50 steuert dann in Abhängigkeit der von einem Benutzer mittels Funkhandsender 70 abgegebenen Öffnungs- oder Schließbefehle, sowie in Abhängigkeit der von der mobilen Überwachungseinheit 40 gemeldeten Zustandssignale und gegebenenfalls weiterer Sensorsignale den Torantrieb 60 entsprechend an. Neben dem Funkhandsender 70 können selbstverständlich auch andere, gegebenenfalls per Drahtverbindung an die Steuereinheit anschließbare Befehlsgeber zum Einsatz kommen.

Das Abschlußprofil 30 umfasst einen an der Torunterkante befestigten elastischen Schlauch, in dessen Hohlraum elektrische, optische oder auch pneumatische Detektionsmittel angeordnet sind. Eine Kollision zwischen Tor 20 und Hindernis führt zu einer Unterbrechung bzw. zu Veränderungen der Überwachungsstrecke, was mittels der Detektionsmittel erkannt wird.

Die Detektionsmittel können als elektrische Kontaktleisten mit mindestens zwei voneinander beabstandeten elektrischen Leitern ausgeführt sein. Beim Zusammendrücken des Schlauches werden diese kurzgeschlossen und signalisieren eine mögliche Kollision. Die mobile Überwachungseinheit 40, die ein derartiges Detektionsmittel beinhaltet oder mit diesem in Verbindung steht, erkennt und reagiert in entsprechender Weise auf das Ereignis.

Weiterhin können die verwendeten Detektionsmittel der mobilen Überwachungseinheiten 40 auch als optische Detektionsmittel ausgeführt sein, die einen gepulst arbeitenden Infrarotsender an einem Ende des Schlauches, sowie einen Infrarotempfänger am anderen Ende des Schlauches aufweisen. Im Falle einer Unterbrechung der optischen Sichtverbindung zwischen Sender und Empfänger wird dies der mobilen Überwachungseinheit signalisiert. Als weitere Möglichkeit besteht die Ausführung des Detektionsmittel als pneumatisches Detektionsmittel mit einem Druckwellensignalgeber an einem Ende des Schlauches, sowie einem Druckwellenschalter am gegenüberliegenden Ende. Ein Zusammendrücken des Schlauches löst eine impulsartige Komprimierung des beinhalteten Luftvolumens aus, dessen Druckwelle durch den Druckwellenschalter erfaßt wird.

Neben der als Schließkantensicherung ausgeführten mobilen Überwachungseinheit können weitere mobile Überwachungseinheiten bestehen, die sowohl beim Aufwärtsbewegen als auch beim Abwärtsbewegen des Tores 20 aktiv sein müssen und gegebenenfalls Gefahrensituationen erkennen. Als Beispiel seien Schlüpftürkontakte oder sonstige Systeme genannt.

Die Steuereinheit 50 und jede mobile Einheit 40, 70 sehen einen integrierten, nicht flüchtigen Speicher vor, in dem eine Kanaltabelle hinterlegt ist. Diese Kanaltabelle umfasst eine Vielzahl von Kanälen, die vorzugsweise im lizenzfreien 2,4 GHZ Frequenzband liegen. Das verwendete Kommunikationsprotokoll zwischen der Steuereinheit 50 und den mobilen Einheiten 40, 70 verwendet ein zeitsynchrones Übertragungsverfahren unter Verwendung eines ausgewählten Übertragungskanals, der nur im Falle von Störungen gewechselt wird. Die stationäre Steuereinheit 50 übernimmt dabei als Mastereinheit alle Funktionen im Zusammenhang mit der Ablaufsteuerung des Übertragungsprotokolls. Sämtliche mobile Einheiten, nämlich die mobile Überwachungseinheit 40, sowie die Funkfernbedienungen 70, werden der Steuereinheit 50 als Slave-Einheiten zugeordnet.

Im Rahmen einer Inbetriebnahmeprozedur muss zunächst die Steuereinheit 50 mit der mobilen Einheit 40, 70 verknüpft werden. Weitere mobile Überwachungseinheiten 40 und/oder Funkhandsender 70können jederzeit nachträglich mit der Steuereinheit 50 verknüpft werden. In einem ersten Schritt ermittelt die Steuereinheit 50 aus der hinterlegten Kanaltabelle einen störungsfreien Übertragungskanal und unterteilt diesen zur Umsetzung des Zeitmultiplexverfahrens in mehrere Zeitschlitze. Gleichzeitig wird für jede einzulernende Überwachungseinheit 40 ein eigener Zeitschlitz für die Kommunikation reserviert, sowie ein weiterer einheitlicher Zeitschlitz für alle verwendeten Funkhandsender 70.

Im weiteren Verlauf wird die Steuereinheit 50 zum Aussenden eines Lerntelegramms auf dem ausgewählten Übertragungskanal angeregt. Die einzubindende mobile Überwachungseinheit 40 wird ebenfalls in einen Lernmodus versetzt und sucht die Kanäle der Kanaltabelle nach dem von der Steuereinheit 50 ausgesendeten Lerntelegramm ab. Sobald dieses erfaßt wird, antwortet die mobile Überwachungseinheit 40 auf dem ermittelten Übertragungskanal mit einem Antworttelegramm, das Adress- und Profilinformationen beinhaltet. Die Profilinformationen umfassen Informationen zur Art und Eigenschaft der mobilen Überwachungseinheit 40, sowie des integrierten Detektionsmittels

Nach Erhalt des Antworttelegramms wählt die Steuereinheit 50 einen der reservierten Zeitschlitze aus und legt die erhaltenen Adress- und Profilinformationen zusammen mit der Lage des Zeitschlitzes im Speicher ab. Bei Bedarf kann zusätzlich eine Lernfahrt zwischen den beiden Endpositionen des Tores 20 initialisiert werden, um die Sendeleistung des Funktransceivers der mobilen Überwachungseinheit 40 optimal an die Einbaubedingungen anzupassen. Nach Abschluss der Lernprozedur wechseln beide Einheiten40, 50 in den normalen Betriebsmodus.

Das Einbinden einer als Funkhandsender 70 ausgeführten mobilen Einheit erfolgt in ähnlicher Weise. Steuereinheit 50 und Funkhandsender 70 werden hierzu in den Lernbetrieb versetzt und der Funkhandsender 70 durchsucht die Kanäle der Kanaltabelle nach dem von der Steuereinheit 50 ausgesendeten Lerntelegramm. Nach erfolgreichem Empfangen des Lerntelegramms sendet der Funkhandsender 70 ein Antworttelegramm mit seiner Adresse und seinem Profil an die Steuereinheit zurück. Da im Falle mehrerer Funkhandsender 70 eine individuelle Verwaltung und eine individuelle Adressierung durch die Steuereinheit 50 nicht unbedingt zweckmäßig ist, wird hier vorgesehen, dass die Steuereinheit 50 eine einzige Adresse und auch nur einen einzigen Zeitschlitz für alle Funkhandsender 70 bereitstellt. Dementsprechend sendet die Steuereinheit 50 im entsprechenden Zeitschlitz für den Funkhandsender 70 ein Telegramm mit einer neuen Handsenderadresse, die dieser nach Erhalt der Nachricht in seinem Speicher hinterlegt und den Erhalt der Nachricht mit dem Aussenden eines entsprechenden Statustelegramms quittiert. Nach Abschluss der Lernprozedur wechselt die Steuereinheit 50 wieder in den normalen Betriebsmodus. Der Funkhandsender wechselt in einen stromsparenden Ruhezustand, der beibehalten wird, solange keine Bedientaste am Funkhandsender betätigt wird.

Im normalen Betriebsmodus werden die einzelnen mobilen Einheiten 40, 70 nach dem Zeitmultiplexverfahren von der Steuereinheit 50 angesprochen. Zur Reduzierung des erforderlichen Energieverbrauchs sollen die mobilen Einheiten 40, 70 nur dann in einen Aktivzustand versetzt werden, wenn in ihrem zugewiesenen Zeitschlitz ein Abfragetelegramm erwartet wird bzw. ein Antworttelegramm auszusenden ist oder eine Aktion auszuführen ist. Die mobilen Einheiten 40, 70 besitzen eine Weckeinrichtung mit integriertem Timer, der das Aufwecken für die Kommunikation und gegebenenfalls die zur Überwachung benötigten elektronischen Baugruppen initiiert und damit auch die Synchronisation mit der Steuereinheit 50 gewährleistet.

Ein vollständiger Kommunikationszyklus beginnt mit dem Aussenden eines Abfragetelegramms von der Steuereinheit 50 an die mobilen Einheiten 40, 70 in dem vorgegebenen Zeitschlitz. Das Abfragetelegramm enthält insbesondere eine Synchronisationsinformation, um der mobilen Einheit 40, 70 mitzuteilen, in welchem zeitlichen Abstand das nächste Abfragetelegramm ausgesendet wird. In diesem Zusammenhang wird der Einheit 40 mitgeteilt, ob und wie lange diese in einen Ruhestand versetzt werden soll oder ob im Falle einer Torbewegung Einheit 40 permanent aktiv bleiben soll. die

Die mobile Überwachungseinheit 40 wurde aufgrund der Synchronisationsinformation aus dem vorhergehenden Abfragetelegramm bereits von der Weckeinrichtung aus dem Ruhezustand in den Aktivzustand versetzt und erwartet in dem zugewiesenen Zeitschlitz das aktuell ausgesendete Abfragetelegramm. Nach dem Empfang des Abfragetelegramms sendet die mobile Überwachungseinheit 40 ein entsprechendes Statustelegramm in dem zugewiesenen Zeitschlitz zurück. Folglich muss der Zeitschlitz von der Steuereinheit 50 derart gewählt werden, dass ein von der Steuereinheit 50 ausgesendetes Abfragetelegramm und das entsprechende beantwortende Statustelegramm unmittelbar aufeinanderfolgend im selben Zeitschlitz übermittelbar sind.

Im Statustelegramm sind zumindest Adressinformationen von der mobilen Überwachungseinheit 50 und Statusinformationen zum Status der mit dieser in Verbindung stehenden Detektionsmittel enthalten. Hierzu zählen beispielsweise der Status der Schließkantensicherung und/oder der Status der Energieversorgung. Zweckmäßigerweise wird während des Aktivzustands der mobilen Überwachungseinheit 40 durch diese eine Abfrage der Detektionsmittel initiiert, so dass diese Information in dem ausgesendeten Statustelegramm aktuell übertragen werden kann. Nach abgeschlossener Überprüfung der Detektionsmittel und abgeschlossenem Aussenden des Statustelegramms lässt sich die mobile Überwachungseinheit 40 gegebenenfalls für die Periode bis zum nächsten erwarteten Abfragetelegramm wieder in den Ruhezustand versetzen.

Die Steuereinheit erwartet nach Absenden des Abfragetelegramms in dem der mobilen Überwachungseinheit 40 zugeordneten Zeitschlitz dessen Statustelegramm. Nach dem Empfang werden die beinhalteten Adressinformationen überprüft und die Statusinformationen ausgewertet. Unter Berücksichtigung der erhaltenen Statusmeldung werden gegebenenfalls entsprechende Steuersignale an den Torantrieb erteilt und eventuell vorhandene Signalisierungs- und Anzeigemittel angesprochen.

Im Gegensatz zur mobilen Überwachungseinheit 40 muss der Funkhandsender 70 nur bei tatsächlicher Nutzung in den Aktivzustand versetzt. Die elektronische Baugruppe des Funkhandsenders 70 befindet sich zunächst im Ruhezustand. Das Aufwecken erfolgt durch Betätigung einer beliebigen Bedientaste des Funkhandsenders 70. Beginnend mit dem zuletzt genutzten Kanal wird auf den Kanälen der Kanaltabelle nach dem von der Steuereinheit 50 zyklisch ausgesendeten Abfragetelegramm für Handsender 70 gesucht. Nach dem Empfangen des Telegramms sendet der Funkhandsender 70 auf dem ermittelten aktuellen Kanal ein Antwortelegramm an die Steuereinheit 50 zurück, das die entsprechenden Tasteninformationen beinhaltet. Damit hat sich der Funkhandsender wieder auf die Steuereinheit 50 synchronisiert. Solange die Bedientaste betätigt wird, werden Sendesignale in dem zugeordneten Zeitschlitz für Funkhandsender 70 an die Steuereinheit 50 gesendet, wobei das Abfragetelegramm für Funkhandsender 70 gleichzeitig zur Synchronisation mit der Steuereinheit 50 herangezogen wird. Gegebenenfalls kann auch eine Sendezeitbegrenzung zum Tragen kommen, um ein Dauersenden des Handsenders aufgrund einer versehentlich gedrückten oder verklemmten Bedientaste zu vermeiden. Beispielsweise wird die maximale Sendedauer auf die für das genutzte Frequenzband erlaubte relative Frequenzbelegungsdauer begrenzt.

Die Steuereinheit 50 überwacht mit Hilfe des ihr zugeordneten Überwachungsmittels permanent den ausgewählten Kanal auf mögliche Störer und Interferenzen. Hierfür steht eine Vielzahl an bekannten Verfahren zur Verfügung, wobei im vorliegenden Ausführungsbeispiel vorzugsweise ein sogenannter Received-Power-Detektor zum Einsatz kommt, der die Kanalqualität anhand der empfangenen Signalstärke beurteilt. Ermittelt die Steuereinheit 50 eine Störung auf dem verwendeten Übertragungskanal, dann sucht sie im Anschluss einen neuen freien Kanal aus der Kanaltabelle aus und initiiert einen Kanalwechsel auf den neuen Übertragungskanal.

Die Überwachungseinheiten 40 bemerken den Wechsel durch das Ausbleiben eines erwarteten Abfragetelegramms oder gegebenenfalls mehrerer aufeinanderfolgender erwarteter Abfragetelegramme. In diesem Fall durchsuchen die mobilen Überwachungseinheiten 40 die Kanäle der hinterlegten Kanaltabelle nach dem erwarteten Abfragetelegramm der Steuereinheit 50. Wird das entsprechende Abfragetelegramm auf einem geänderten Übertragungskanal empfangen, sendet die mobile Überwachungseinheit 40 im gleichen Zeitschlitz ein Statustelegramm zurück an die Steuereinheit 50, wodurch die vollständige Synchronisation der mobilen Einheit 40 auf den neuen Übertragungskanal abgeschlossen ist.

Sollten während des normalen Betriebs ein oder mehrere aufeinanderfolgende, von einer mobilen Überwachungseinheit ausgesendete Statustelegramme nicht von der Steuerungseinheit empfangen werden, wird dies von der Steuereinheit 50 als Fehlerzustand interpretiert und mittels eventuell vorhandener Signalisierungsmittel angezeigt.

Tritt ein solcher Fehlerzustand im Verlauf einer Öffnungs- und/oder Schließbewegung des Tores 20 auf, muss außerdem der Antrieb unmittelbar gestoppt werden. Im Falle einer erfassten Störung auf dem Kanal wird die Steuereinheit 50 nun einen Kanalwechsel initiieren. Gelingt die Resynchronisation mit allen für die Überwachung der Torbewegung erforderlichen mobilen Überwachungseinheiten 40 und wird durch die Detektionsmittel ein fehlerfreier Zustand gemeldet, kann die Torfahrt in der zuvor ausgeführten Bewegungsrichtung anschließend automatisch fortgesetzt werden. Schlägt die Resynchronisation dagegen fehl und angeforderte Statustelegramme werden weiterhin nicht empfangen, muss die Steuereinheit 50 das Tor gegebenenfalls in einen sicheren Zustand verfahren.

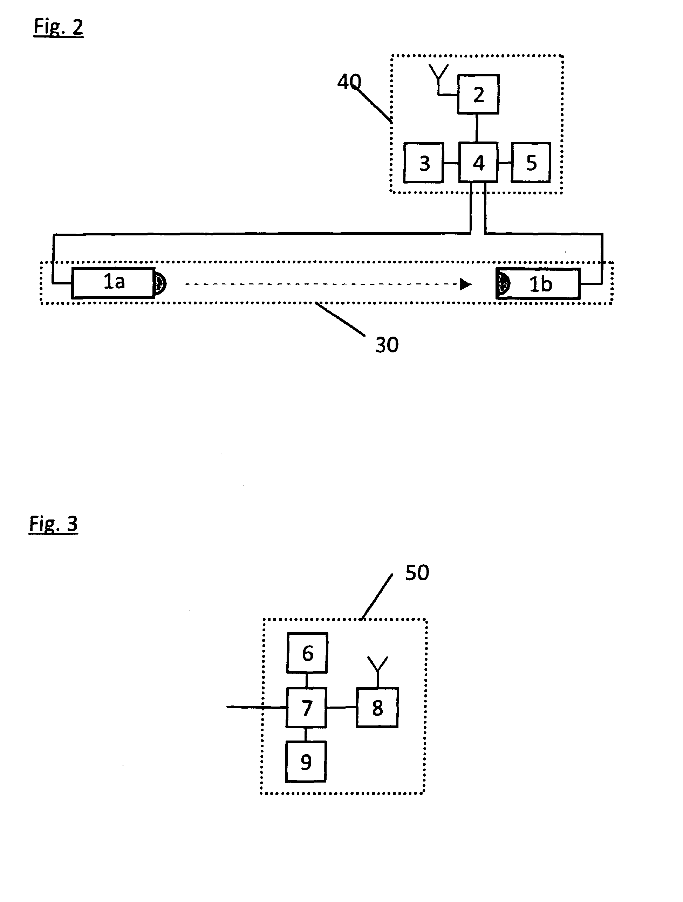

Figur 2 zeigt das Blockschaltbild einer mobilen Überwachungseinheit 40 im Zusammenwirken mit den im Abschlussprofil 30 angeordneten Detektionsmitteln 1 a, 1 b. Die mobile Überwachungseinheit 40 umfasst insbesondere eine Hochfrequenzbaugruppe 2 mit einem Funktransceiver und einer Antenne. Weiterhin ist eine Hilfsspannungsquelle 3, eine Auswerteeinheit 4, die in bevorzugter Weise einen Mikrocontroller mit einem integriertem Timer und einer Weckeinrichtung enthält, und ein Speicher 5, in dem eine Kanaltabelle hinterlegt ist, vorhanden.

Die mobile Überwachungseinheit 40 kann weiterhin Bedienelemente enthalten, die insbesondere dazu ausgelegt sind, um die Einheit 40 in einen Lernbetrieb zu versetzen. Es ist auch möglich, mittels optischer und/oder akustischer Anzeigemittel, die der mobilen Überwachungseinheit 40 zugeordnet sind, Rückmeldungen während der Ausführung des Lernbetriebs, sowie Betriebs- und/oder Fehlerzustände während der Ausführung des normalen Betriebs abzugeben.

Die Detektionsmittel 1 a, 1b können bevorzugt auf einem elektrischen, optischen oder pneumatischen Wirkprinzip basieren. Der Zustand der Detektionsmittel 1a, 1b wird von der Auswerteeinheit 4 zyklisch oder permanent abgefragt. Insbesondere können während eines Torstillstandes die Auswerteeinheit 4 und die Hochfrequenzbaugruppe 2 der mobilen Überwachungseinheit 40 in einen Ruhezustand versetzt und nur in zyklischen Abständen zur Abfrage der Detektionsmittel 1a, 1b und zur Kommunikation mit der Steuereinheit 50 aufgeweckt werden. Damit wird der Energieverbrauch der mobilen Überwachungseinheit 40 deutlich reduziert. Während einer Torbewegung in Schließrichtung oder generell bei Torbewegungen in Öffnungs- und Schließrichtung ist es dagegen zweckmäßig, den Zustand der Detektionsmittel 1a, 1 b permanent zu überprüfen. Dementsprechend werden die Auswerteeinheit 4 und die Hochfrequenzbaugruppe 2 der mobilen Überwachungseinheit 40 in diesem Fall nicht in einen Ruhezustand versetzt. Es aber auch hier denkbar, zur weiteren Reduzierung des Energieverbrauchs zumindest die Hochfrequenzbaugruppe 2 für kurze Perioden in einen Ruhezustand zu versetzen, vorausgesetzt, die verwendeten Funktransceiver lassen eine sehr schnelle Kommunikation zu, so dass die geforderten Systemreaktionszeiten trotzdem eingehalten werden.

Figur 3 zeigt ein vereinfachtes Blockschaltbild der Steuereinheit 50, welche zumindest eine Spannungsversorgung 6 und eine Auswerteeinheit 7, die in bevorzugter Weise einen Mikrocontroller mit integriertem Timer enthält, umfasst. Ferner sind eine Hochfrequenzbaugruppe 8 mit einem Funktransceiver, einer Antenne und Überwachungsmitteln zur Bestimmung der Kanalqualität und ein Speicher 9, in dem eine Kanaltabelle hinterlegt ist, vorgesehen.

Der Steuereinheit 50 können außerdem Bedienelemente und Anzeigeelemente zugeordnet sein, die zur Bedienung und Signalisierung im normalen Betrieb und im Lernbetrieb dienen.

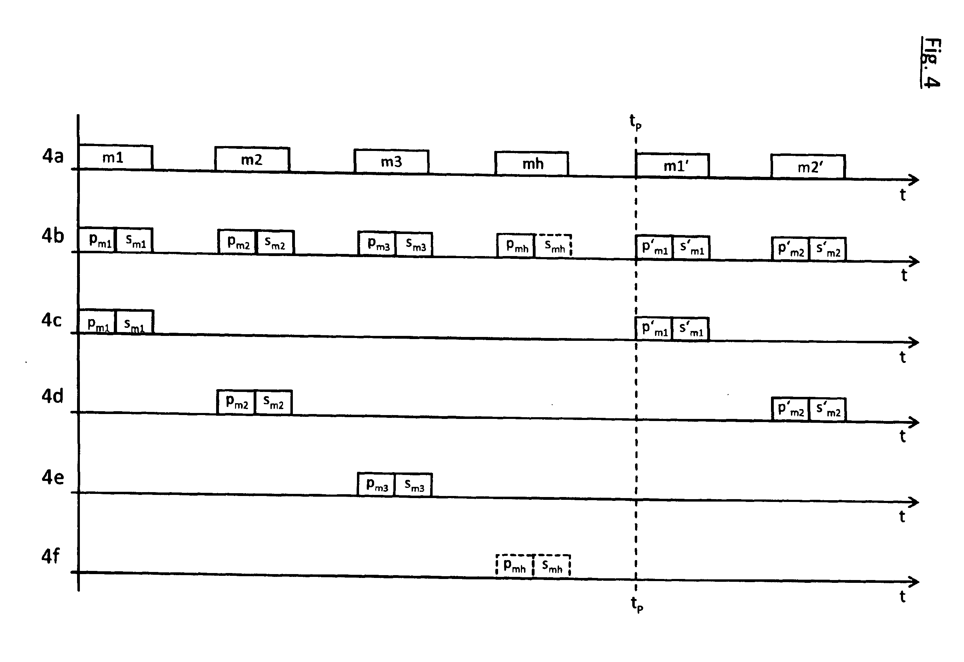

Figur 4 zeigt beispielhaft ein Zeitschema des Ablaufs der Kommunikation für eine bevorzugte Ausführung der erfindungsgemäßen Überwachungsvorrichtung mit einer Steuereinheit 50, drei mobilen Überwachungseinheiten 40 und zumindest einem Funkhandsender 70.

Gemäß Darstellung 4a werden innerhalb einer Periode t_{P}, die einen vollständigen Kommunikationszyklus beschreibt, von der Steuereinheit vier Zeitschlitze reserviert: drei Zeitschlitze m1, m2, m3 für die Kommunikation mit den mobilen Überwachungseinheiten 40 und ein weiterer Zeitschlitz mh für die Kommunikation mit wenigstens einem Funkhandsender 70. Die Periodendauer t_{P} wird von der Steuereinheit 50 vorgegeben und kann gemäß einer bevorzugten Ausführung zumindest zwei verschiedene Werte einnehmen: t_{P_min} bzw. t_{P_max}. Dabei sollte der Wert t_{P_min} bei ca. 10 ms liegen, oder gegebenenfalls sogar kürzer sein, und der Wert t_{P_max} bei etwa 2 Sekunden liegen. Insbesondere soll bei einer zu vollziehenden Torbewegung der Wert t_{P_min} gewählt werden, um eine kurze Systemreaktionszeit zu garantieren. Dagegen kann für den Fall eines Torstillstands die Periodendauer t_{P_max} gewählt werden, um somit den Energieverbrauch der mobilen Überwachungseinheiten 40 auf ein Minimum zu reduzieren.

Die Lage der Zeitschlitze zueinander kann im Prinzip beliebig gewählt werden, wobei eine Überlappung selbstverständlich nicht vorgesehen ist. Die Dauer eines Zeitschlitzes bewegt sich typischerweise im Mikrosekunden- oder Millisekundenbereich und wird, unabhängig von der Periodendauer t_{P}, für alle mobilen Einheiten 40, 70 vorzugsweise gleich gewählt. Es ist aber auch denkbar, in Abhängigkeit vom Typ der mobilen Einheit 40, 70, als auch in Abhängigkeit von der Länge der Periodendauer t_{P} mit unterschiedlich langen Zeitschlitzen zu operieren.

Darstellung 4b zeigt den zeitlichen Ablauf der Kommunikation aus Sicht der Steuereinheit 50. Die reservierten Zeitschlitze werden jeweils in einen Subzeitschlitz pₘₓ für das Senden des Abfragetelegramms und einen darauffolgenden Subzeitschlitz sₘₓ für den Empfang der Statusmeldung unterteilt. Nach Aussenden eines Abfragetelegramms an die erste mobile Überwachungseinheit 40 im Subzeitschlitz pₘ₁ wird im Subzeitschlitz sₘ₁ ein von dieser ersten mobilen Überwachungseinheit 40 zurückgesendetes Statustelegramm erwartet. In derselben Weise werden auch die zweite Überwachungseinheit mittels Subzeitschlitze pₘ₂ , sₘ₂ und die dritte mobile Überwachungseinheit mittels Subzeitschlitze pₘ₃, sₘ₃ angesprochen. Außerdem wird ein Abfragetelegramm für Funkhandsender 70 im Subzeitschlitz pₘₕ ausgesendet. Ein aktivierter Funkhandsender 70 wird in dem zugehörigen Subzeitschlitz sₘₕ nun sein Antworttelegramm an die Steuereinheit 50 zurücksenden. Ist kein Funkhandsender 70 in einem aktiven Zustand, bleibt das Antworttelegramm in dem Subzeitschlitz dagegen aus.

Nach Ablauf der Periodendauer t_{P} beginnt der nächste Kommunikationszyklus mit dem Aussenden eines neuen Abfragetelegramms von der Steuereinheit 50 an die erste mobile Überwachungseinheit 40 im Subzeitschlitz p'ₘ₁ und dem Empfang eines entsprechendes Statustelegramms im Subzeitschlitz s'ₘ₁.

Darstellung 4c zeigt den Ablauf der Kommunikation aus Sicht der ersten mobilen Überwachungseinheit 40. Diese erwartet im Subzeitschlitz pₘ₁ ein Abfragetelegramm von der Steuereinheit 50 und sendet nach Empfang dieses Telegramms ein entsprechendes Statustelegramm im Subzeitschlitz sₘ₁ an die Steuereinheit 50 zurück. Anschließend kann die Hochfrequenzbaugruppe 2 der ersten mobilen Überwachungseinheit 40 in einen Ruhezustand versetzt werden, und zwar solange, bis der Empfang des nächsten Abfragetelegramms im Subzeitschlitz p'ₘ₁ ansteht.

In analoger Weise kommunizieren in dem betrachteten Ausführungsbeispiel die zweite mobile Überwachungseinheit (Darstellung 4d) und die dritte mobile Überwachungseinheit (Darstellung 4e) in den für sie reservierten Zeitschlitzen mit der Steuereinheit 50.

Funkhandsender 70 kommunizieren nur dann mit der Steuereinheit 50, wenn sie sich in einem aktiven Zustand befinden, d.h. solange eine Bedientaste am Funkhandsender 70 betätigt wird. Ansonsten befindet sich die Elektronik des Funkhandsenders 70 im Ruhezustand, um den Energieverbrauch zu minimieren. Dementsprechend werden gemäß Darstellung 4f Abfragetelegramme im Subzeitschlitz pₘₕ nur dann empfangen und Statustelegramme im Subzeitschlitz sₘₕ nur dann zurückgesendet, wenn ein aktiver Zustand vorliegt. Anderenfalls werden die von der Steuereinheit 50 ausgesendeten Abfragetelegramme vom Funkhandsender 70 ignoriert und auch keine entsprechenden Antworttelegramme zurückgesendet.

Das zeitliche Regime des Ablaufs der Kommunikation wird jeweils von der Steuereinheit 50 mit dem aktuell ausgesendeten Telegramm vorgegeben und von den mobilen Überwachungseinheiten 40 und dem mindestens einen Funkhandsender 70 - falls dieser sich in einem aktiven Zustand befindet - im nachfolgenden Kommunikationszyklus umgesetzt. Steht beispielsweise eine Änderung der Periodendauer von t_{P_max} in t_{P_min} an, da das Tor 20 in Bewegung versetzt werden soll, ermittelt die Steuereinheit 50 die neue Lage der nächsten Subzeitschlitze (p'ₘ₁, p'ₘ₂, p'ₘ₃, p'ₘₕ) für die Abfrage der mobilen Einheiten 40, 70 und teilt diese den Einheiten 40, 70 im aktuellen Abfragetelegramm mit. Nach vorgabegemäßer Beendigung des aktuellen Kommunikationszyklus setzen die Steuereinheit 50 und die mobilen Einheiten 40, 70 ihre Kommunikation dann im Rhythmus der neuen Periodendauer fort.

In einer vorteilhaften Ausführungsform führt die Auswerteeinheit 4 der mobilen Überwachungseinheiten 40 die Abfrage der Detektionsmittel 1a, 1b derart durch, dass ein Abfrageergebnis unmittelbar vor Beginn des Subzeitschlitzes sₘₓ für das Senden des Statustelegramms vorliegt und dieses Ergebnis mit dem aktuell auszusendenden Statustelegramm übertragen werden kann. Neben den Informationen zum Zustand der Detektionsmittel 1 a, 1b können in dem Statustelegramm weitere Informationen enthalten sein, beispielsweise zum Ladezustand der Hilfsspannungsquelle 3, sowie eine Adressinformation zur Verifizierung bei der Steuereinheit 50.

In einer weiteren bevorzugten Ausführungsform überwacht die Steuereinheit 50 den für die Kommunikation genutzten Kanal permanent auf mögliche Störungen. Hierzu weist die Hochfrequenzbaugruppe 8 gesonderte Überwachungsmittel auf, die vorzugsweise auf einem sogenannten Received-Power-Detektor basieren und die ebenso auch die Häufigkeit der fehlgeschlagenen Verbindungen erfassen. Werden Störungen festgestellt, die eine weitere Kommunikation auf dem aktuellen Kanal nicht mehr zulassen, durchsucht die Steuereinheit 50 die im Speicher 9 abgelegte Kanaltabelle nach einem neuen freien Kanal. Häufig gestörte Kanäle können dabei von vornherein mit einer geringeren Wichtung in die Auswahl einbezogen werden. Die Bewertung der Kanalqualität erfolgt ebenfalls mit Hilfe der Überwachungsmittel. Sobald ein störungsfreier Kanal ermittelt ist, initiiert die Steuereinheit 50 einen Kanalwechsel auf diesen neuen Kanal und richtet das Kommunikationsschema gemäß den Figuren 4a und 4b ein. Dabei kann es sich als sinnvoll erweisen, die Abfragetelegramme solange im Rhythmus der Periodendauer t_{P_min} auszusenden, bis sich alle mobilen Überwachungseinheiten 40 auf den neuen Kanal synchronisiert haben.

Die mobilen Überwachungseinheiten 40 bemerken einen Kanalwechsel durch das Ausbleiben eines oder gegebenenfalls mehrerer aufeinanderfolgender Abfragetelegramme auf dem bislang genutzten Kanal. Sie durchsuchen nun die Kanäle der im Speicher 5 hinterlegten Kanaltabelle nach dem an sie adressierten Abfragetelegramm. Sobald eine mobile Überwachungseinheit 40 das an sie adressierte Abfragetelegramm empfängt, sendet sie im zugehörigen Subzeitschlitz gemäß Darstellung 4c, 4d oder 4e ein entsprechendes Statustelegramm an die Steuereinheit 50 zurück und signalisiert damit gleichzeitig, dass sie sich auf den neuen Kanal synchronisiert hat.

Im Falle eines Funkhandsenders 70 erfolgt die Resynchronisation nach einem Kanalwechsel in ähnlicher Weise wie bei den mobilen Überwachungseinheiten 40. Da ein Funkhandsender 70 allerdings nur bei tatsächlicher Nutzung in den Aktivzustand versetzt wird, kann dieser auch nur während seines Aktivzustands auf das Abfrageschema der Steuereinheit 50 synchronisiert werden. Dementsprechend wird unmittelbar nach dem Eintritt in den Aktivzustand auf den Kanälen der Kanaltabelle nach dem von der Steuereinheit 50 zyklisch ausgesendeten Abfragetelegramm für Handsender gesucht. Nach dem Empfang des Telegramms sendet der Funkhandsender 70 auf dem ermittelten aktuellen Kanal ein Antworttelegramm an die Steuereinheit 50 zurück, das die entsprechenden Tasteninformationen beinhaltet. Damit hat sich der Funkhandsender 70 wieder auf die Steuereinheit 50 synchronisiert.

Wird im Verlauf einer Öffnungs- und/oder Schließbewegung des Tores ein Kanalwechsel erforderlich, muss der Torantrieb 60 unmittelbar gestoppt werden. Gemäß einer bevorzugten Ausführung kann nach erfolgter Resynchronisation mit allen mobilen Überwachungseinheiten 40 und ordnungsgemäß gemeldetem Status der Detektionsmittel 1a, 1b die Torfahrt in der zuvor ausgeführten Bewegungsrichtung automatisch wieder fortgesetzt werden.

Anstelle des gezeigten vertikalen Tores kann die erfindungsgemäße Überwachungseinrichtung ebenso auch für die Überwachung horizontal bewegter Tore, sowie für die Überwachung von Türen und sonstigen motorisch betriebenen Gebäudeabschlüssen genutzt werden. Neben der Hauptschließkante eines Tores oder einer Tür können auch eine gegebenenfalls vorhandene Nebenschließkante und/oder die Gegenschließkante überwacht werden. Dies ist vor allem dann zweckmäßig, wenn sich auch die Nebenschließkante und/oder die Gegenschließkante an bewegten Tür- bzw. Torabschnitten befinden. Denkbar ist auch, einen Schlupftürkontakt zur Absicherung einer in den Torflügel eingebauten Schlupftür mit in die Überwachung einzubinden und eine Torbewegung nur bei geschlossener Schlupftür zuzulassen. Die Anzahl der von der Steuereinheit 50 abzufragenden mobilen Einheiten 40, 70 richtet sich dabei nach der Leistungsfähigkeit der verwendeten elektronischen Komponenten und nach der geforderten Systemreaktionszeit.

### Bezugszeichenliste

- A: Wandöffnung
- B: Torblatt
- C: Abschlussprofil
- D: mobile Überwachungseinheit
- E: Steuereinheit
- F: Torantrieb
- G: Funkhandsender

- 1 a, 1 b: Detektionsmittel
- 2: Hochfrequenzbaugruppe
- 3: Hilfsspannungsquelle
- 4: Auswerteeinheit
- 5: Speicher
- 6: Spannungsversorgung
- 7: Auswerteeinheit
- 8: Hochfrequenzbaugruppe
- 9: Speicher

## Patentansprüche

1. Vorrichtung zur Überwachung eines motorisch angetriebenen Tores oder einer Tür mit einer stationären Steuereinheit und wenigstens einer mobilen Einheit, wobei die Steuereinheit und wenigstens eine mobile Einheit wenigstens einen Speicher aufweisen oder mit diesem in Verbindung stehen oder mit diesem verbindbar sind, wobei in wenigstens einem Speicher eine Kanaltabelle abgelegt oder ablegbar ist,
**dadurch gekennzeichnet,**
**dass** die Steuereinheit mit wenigstens einer mobilen Einheit über einen aus der Kanaltabelle gewählten Übertragungskanal drahtlos zur Kommunikation per Zeitmultiplexverfahren verbindbar oder verbunden ist und die Steuereinheit weiterhin ein Überwachungsmittel zur Überwachung der Kanalqualität aufweist, das nur bei Bedarf einen Kanalwechsel auslöst.

2. Vorrichtung nach Anspruch 1, **dadurch gekennzeichnet, dass** die Steuereinheit wenigstens einen Timer aufweist und wenigstens eine mobile Einheit eine Weckeinrichtung mit Timer aufweist.

3. Vorrichtung nach Anspruch 1 oder 2, **dadurch gekennzeichnet, dass** wenigstens eine mobile Einheit eine mobile Überwachungseinheit umfasst, die wenigstens ein Detektionsmittel aufweist oder mittelbar oder unmittelbar mit einem Detektionsmittel in Verbindung steht oder verbindbar ist.

4. Vorrichtung nach Anspruch 3, **dadurch gekennzeichnet, dass** wenigstens ein Detektionsmittel auf einem elektrischen und/oder optischen und/oder pneumatischen Wirkungsprinzip basiert.

5. Vorrichtung nach einem der vorangegangenen Ansprüche, **dadurch gekennzeichnet, dass** wenigstens eine mobile Einheit eine Funkfernbedienung umfasst.

6. Vorrichtung nach einem der vorangegangenen Ansprüche, **dadurch gekennzeichnet, dass** wenigstens ein Übertragungskanal im lizenzfreien Frequenzband, insbesondere im 2.4 GHz Frequenzband liegt.

7. Vorrichtung nach einem der vorangegangenen Ansprüche, **dadurch gekennzeichnet, dass** die Kommunikation zwischen Steuereinheit und wenigstens einer mobilen Einheit bidirektional erfolgt.

8. Vorrichtung nach einem der vorangegangenen Ansprüche, **dadurch gekennzeichnet, dass** wenigstens eine mobile Einheit eine batteriebetriebene Energieversorgung aufweist.

9. Vorrichtung nach einem der vorangegangenen Ansprüche, wobei das Überwachungsmittel einen Received Power Detector umfasst und gleichzeitig die Häufigkeit der fehlgeschlagenen Verbindungen registriert.

10. Verfahren zum Betrieb eines motorisch angetriebenen Tores oder einer Tür mit einer Steuereinheit und wenigstens einer mobilen Einheit, die über eine drahtlose Verbindung mit der Steuereinheit kommuniziert, wobei
i. die Steuereinheit aus einer abrufbaren Kanaltabelle einen bevorzugten Übertragungskanal auswählt,
ii. die Kommunikation zwischen Steuereinheit und allen mobilen Einheiten per Zeitmultiplexverfahren auf dem bevorzugten Übertragungskanal erfolgt, wobei jeder mobilen Einheit ein Zeitschlitz durch die Steuereinheit zugeteilt wird und
iii. die Steuereinheit den Übertragungskanal auf Störeinflüsse überwacht und gegebenenfalls einen Kanalwechsel durchführt.

11. Verfahren nach Anspruch 10, wobei die Steuereinheit bei Inbetriebnahme des Systems die Kanalqualität der in der Kanaltabelle hinterlegten Kanäle ermittelt und auf Basis dieser Daten einen Übertragungskanal bestimmt.

12. Verfahren nach Anspruch 10 oder 11, wobei in wenigstens einer mobilen Einheit eine Kanaltabelle, die vorzugsweise identische Einträge zur Kanaltabelle der Steuereinheit aufweist, hinterlegt ist.

13. Verfahren nach Anspruch 10,11 oder 12, wobei die Steuereinheit und/oder wenigstens eine mobile Einheit zum Initialisieren der Verbindung manuell oder automatisch in einen Lernbetrieb geschaltet werden.

14. Verfahren nach Anspruch 13, wobei der Lernbetrieb die folgenden Verfahrensschritte umfasst:
i. Übermittlung eines Lernsignals von der Steuereinheit auf dem Übertragungskanal,
ii. Überprüfung aller in der Kanaltabelle hinterlegten Kanäle auf ein von der Steuereinheit ausgesendetes Lernsignal durch die mobile Einheit und Übermittlung eines Antwortsignals an die Steuereinheit nach erfolgreichem Empfang des Lernsignals und
iii. Zuweisen eines reservierten Zeitschlitzes an die einzubindende mobile Einheit durch die Steuereinheit, Auswerten des empfangenen Antwortsignals und Hinterlegung der relevanten Auswertedaten mit der zugewiesenen Zeitschlitzkennung in einem dafür vorgesehenen Speicher.

15. Verfahren nach Anspruch 14, wobei das Antwortsignal Adress- und/oder Profilinformationen der mobilen Einheit umfasst.

16. Verfahren nach einem der Ansprüche 13 bis 15, wobei der Lernbetrieb eine abschließende Lernfahrt vorsieht, die insbesondere eine Torbewegung zwischen den beiden Torendlagen vorsieht.

17. Verfahren nach einem der Ansprüche 10 bis 16, wobei jeder als Funkfernbedienung ausgeführten mobilen Einheit von der Steuereinheit eine einheitliche Adresse und/oder ein einheitlicher Zeitschlitz zugeteilt wird und/oder dieser von der Steuereinheit an die mobile Einheit übermittelt wird.

18. Verfahren nach einem der Ansprüche 10 bis 17, wobei jederzeit weitere mobile Einheiten mit der Steuereinheit verbindbar sind.

19. Verfahren nach einem der Ansprüche 10 bis 18, wobei wenigstens eine mobile Einheit einen von der Steuereinheit vollzogenen Kanalwechsel durch Ausbleiben zumindest eines erwarteten Sendesignals in dem zugewiesenen Zeitschlitz bemerkt und gegebenenfalls alle Kanäle der Kanaltabelle auf eine Sendesignal der Steuereinheit überprüft und bei erfolgreichem Empfang den neuen Kanal als bevorzugten Übertragungskanal nutzt.

20. Verfahren nach einem der Ansprüche 10 bis 19, wobei wenigstens eine mobile Einheit von einem Aktivzustand in einen energiesparsamen Ruhezustand versetzt wird, falls eine Überwachung der Toraktivität nicht notwendig ist.

21. Verfahren nach Anspruch 20, wobei die Steuereinheit wenigstens eine mobile Einheit per Abfragetelegramm in den energiesparenden Ruhezustand versetzt, wobei der mobilen Einheit darin vorzugsweise Informationen über Ruhezustands- und/oder Aktivzustandsphasen mitgeteilt werden.

22. Verfahren nach einem der Ansprüche 10 bis 21, wobei das Verfahren auf einer Vorrichtung gemäß einem der Ansprüche 1 bis 9 ausgeführt wird.
